# EUROPÄISCHE PATENTSCHRIFT

(11) **EP 1 367 390 B1**
(45) Veröffentlichungstag und Bekanntmachung des Hinweises auf die Patenterteilung: **19.09.2007**
(21) Anmeldenummer: 03010646.2
(22) Anmeldetag: 13.05.2003
(51) Int. Cl.: G01N 29/07, G01H 5/00

(54) **Verfahren und Vorrichtung zur Bestimmung der Schallgeschwindigkeit in einem Werkstoff in Abhängigkeit der Temperatur**
Method and apparatus for determination of sound velocity of a material depending on the temperature
Procédé et disposif pour détecter la vitesse du son d'un materiau dépendant de la température

(30) Priorität: 29.05.2002 DE 10223786
(43) Veröffentlichungstag der Anmeldung: 03.12.2003
(73) Patentinhaber: SMS Meer GmbH, 41069 Mönchengladbach (DE)
(72) Erfinder: Sauerland, Martin, 41068 Mönchengladbach (DE); Deppe, Gerd-Joachim Dr., 47809 Krefeld (DE)
(74) Vertreter: Grosse, Wolf-Dietrich Rüdiger

(56) Entgegenhaltungen:
- DE-B- 1 248 347
- US-A- 4 762 425
- HE P: "Simultaneous measurement of sound velocity and wall thickness of a tube" ULTRASONICS, IPC SCIENCE AND TECHNOLOGY PRESS LTD. GUILDFORD, GB, Bd. 39, Nr. 6, Oktober 2001 (2001-10), Seiten 407-411, XP004324322 ISSN: 0041-624X

## Beschreibung

Die Erfindung betrifft ein Verfahren zur Bestimmung der Schallgeschwindigkeit in einem Werkstoff in Abhängigkeit von seiner Temperatur sowie eine Vorrichtung, insbesondere zur Durchführung des Verfahrens.

In vielen Bereichen der Technik werden Rohre aus Stahl benötigt, die beispielsweise durch ein Verfahren hergestellt werden können, bei dem zylindrisch geformtes Ausgangsmaterial in einem Schrägwalzwerk unter Einsatz eines axial feststehenden Lochdorns zu einem rohrförmigen Hohlblock umgeformt wird. Zur Umformung des zylindrisch geformten Ausgangsmaterials zu einem nahtlosen Rohr wird das Ausgangsmaterial über den Lochdorn gewalzt. Ein solches Verfahren ist beispielsweise aus der EP 0 940 193 A2 bekannt.

Beim Streckreduzierwalzen und beim Reduzier- und Maßwalzen nahtloser Stahlrohre durchläuft das zu bearbeitende Rohr eine Walzstraße, in der in Förderrichtung des Rohres hintereinander eine Anzahl Walzgerüste angeordnet sind. In jedem Walzgerüst sind Walzen gelagert, die beim Walzvorgang das Rohr jeweils um einen definierten Umfangsabschnitt kontaktieren. Insgesamt wirken dabei in jedem Walzgerüst mehrere, beispielsweise drei, Walzen so zusammen, dass das Rohr im wesentlichen über seinen gesamten Umfang von den Walzen kontaktiert wird. Das Rohr wird damit auf einen reduzierten Durchmesser gewalzt und dabei auf eine genaue Form gebracht.

Das Rohr soll nach dem Walzen eine ideale Form haben, d. h. die zylindrische Kontur des Außenumfangs und die des Innenumfangs sollen zwei konzentrische Kreise bilden. Tatsächlich gibt es indes stets Toleranzen im Fertigrohr, so dass eine gewisse Exzentrizität der Kreiskontur des Innenumfangs relativ zu derjenigen des Außenumfangs vorliegt.

Der entscheidende Qualitätsparameter bei der Rohrherstellung ist die Rohrwanddicke, die im Produktionsprozess gemessen und überwacht wird. Zur Ermittlung der Wanddicke heißer Rohre sind Laser-Ultraschall-Messverfahren bekannt. Ultraschall-Dicken-Messverfahren nach der Impuls-Echo-Methode ermitteln über die Laufzeitmessung eines Ultraschallimpulses die Wanddicke. Hierfür muss die Schallgeschwindigkeit im Werkstoff bei der vorliegenden Temperatur des Rohres bekannt sein. Die Schallgeschwindigkeit ist sowohl werkstoff- als auch temperaturabhängig. Ein Verfahren zur Messung der Schallgeschwindigkeit in Abhängigkeit von der Temperatur ist aus der DE-PS 12 48 347 bekannt.

Aus der CA 2 187 957 A1 ist es bekannt, wie Ultraschallimpulse zur Kontrolle und Überwachung der Prozessbedingungen in flüssigen Metallen eingesetzt werden können. Das Prinzip ist auch hier die Impuls-Echo-Methode, die reflektierte Ultraschall-Schwingungen auswertet.

Für die Bestimmung der Schallgeschwindigkeit im Material bei einer vorgegebenen Temperatur, die auch bei der bekannten Ausführung die entscheidende Eingangsgröße ist, kommen verschiedene Möglichkeiten in Betracht.

So kann die benötigte Schallgeschwindigkeit bei einer bestimmten Temperatur durch Interpolation von Werten ermittelt werden, die in einschlägigen Tabellen enthalten sind. Hierbei hat es sich als nachteilhaft herausgestellt, dass der so gewonnene Wert für die Schallgeschwindigkeit zu ungenau ist, um eine hinreichend genaue Bestimmung der Wanddicke zu ermöglichen.

Ein anderer Weg zur Bestimmung der Schallgeschwindigkeit bei einer bestimmten Temperatur sieht vor, dass eine Rohrprobe mit bekannter Wanddicke auf die gewünschte Temperatur erhitzt und mit einem Wanddicken-Messgerät, das nach dem Laser-Ultraschall-Heißwanddicken-Messverfahren (Impuls-Echo-Methode) arbeitet, vermessen wird. Aufgrund der bekannten Wanddicke kann nach Messung des Zeitintervalls zwischen Signal und Echo auf die Schallgeschwindigkeit bei der vorliegenden Temperatur rückgerechnet werden.

Nachteilig ist es hier jedoch, dass bei höheren Temperaturen die Rohrprobe schnell verzundert und so das Messergebnis verfälscht wird. Ferner wird im Messpunkt durch Anwenden des Laer-Ultraschall-Heißwanddicken-Messverfahrens Material abgetragen, so dass die Probe zwischen zwei Messungen bewegt werden muss.

Der Erfindung liegt daher die Aufgabe zugrunde, ein Verfahren und eine zugehörige Vorrichtung zu schaffen, mit dem bzw. mit der die vorstehenden Nachteile überwunden werden können. Es soll möglich sein, in einfacher und präziser Weise die longitudinale Schallgeschwindigkeit in einem Werkstoff bei vorgegebener Temperatur bestimmen zu können.

Die Lösung dieser Aufgabe sieht verfahrensgemäß die Abfolge der folgenden Schritte vor:
a) Zunächst wird ein sich in einer Längsrichtung erstreckender Probenkörper bereitgestellt, der aus dem zu vermessenden Werkstoff besteht. Dabei weist der Probenkörper, vorzugsweise in einem seiner Endabschnitte, zwei Reflektionszonen in vorgebenem Abstand zueinander auf.
b) Dann wird zumindest der Endabschnitt des Probenkörpers auf die Temperatur erhitzt, bei der die Schallgeschwindigkeit ermittelt werden soll.
c) Sodann wird ein Ultraschallsignal in den Probenkörper eingeleitet.
d) Dann erfolgt ein Messen des Zeitintervalls zwischen zwei vom Probenkörper emittierten Echo-Ultraschallsignalen, die durch Reflektion des Ultraschallsignals an den beiden Reflektionszonen entstehen.
e) Schließlich wird die Schallgeschwindigkeit als Quotient des Abstands und des gemessenen Zeitintervalls berechnet.

Dabei wird zumindest das dem erwärmten Endabschnitt gegenüberliegende Ende des Probenkörpers gekühlt.

Um den funktionalen Zusammenhang zwischen Schallgeschwindigkeit und Temperatur zu bestimmen, werden gemäß einer ersten Weiterbildung die obigen Schritte b) bis e) bei unterschiedlichen Temperaturen wiederholt. Dabei erfolgt - wenn die Probe aus Metall, insbesondere aus Stahl, besteht - die Messung der Schallgeschwindigkeit bevorzugt bei Temperaturen zwischen Raumtemperatur und 1.200 °C. Zumeist reicht es dabei aus, wenn die Messung der Schallgeschwindigkeit bei Temperaturen zwischen 600 °C und 1.200 °C in Schritten von 50 K erfolgt. Bei Temperaturen zwischen Raumtemperatur und 600 °C können Schritte von 100 K ausreichen.

Mit Vorteil befinden sich die beiden Reflektionszonen in einem der Endabschnitte des Probenkörpers, wobei im wesentlichen nur dieser Endabschnitt gleichmäßig erwärmt wird. Die Kühlung des dem erwärmten Endabschnitt gegenüberliegenden Ende des Probenkörpers kann vorteilhaft auch für den gesamten nicht erwärmten Teil des Probenkörpers vorgesehen werden.

Bevorzugt erfolgt die Einleitung des Ultraschallsignals in den Probenkörper an dem dem erwärmten Endabschnitt gegenüberliegende Ende des Probenkörpers. Die Einleitung des Ultraschallsignals in den Probenkörper kann dabei über ein Piezo-Ultraschallelement mit Wasserankopplung erfolgen.

Die Vorrichtung zur Bestimmung der Schallgeschwindigkeit weist folgende Elemente auf:
- einen sich in einer Längsrichtung erstreckenden Probenkörper, der aus dem zu vermessenden Werkstoff besteht, wobei der Probenkörper, vorzugsweise in einem seiner Endabschnitte, zwei Reflektionszonen in vorgegebenem Abstand aufweist;
- ein Heizmittel, insbesondere einen Ofen, mit dem zumindest ein Endabschnitt des Probenkörpers auf eine gewünschte Temperatur, bei der die Schallgeschwindigkeit ermittelt werden soll, erwärmt werden kann;
- Mittel zum Einleiten eines Ultraschallsignals in den Probenkörper;
- Mittel zum Messen des Zeitintervalls zwischen zwei Echo-Ultraschallsignalen, die der Probenkörper emittiert, die durch Reflektion des Ultraschallsignals an den beiden Reflektionszonen entstehen;
- Mittel zum Berechnen der Schallgeschwindigkeit als Quotient des Abstands und des Zeitintervalls;
- Mittel zum Kühlen zumindest des dem erwärmten Endabschnitt gegenüberliegenden Endes des Probenkörpers.

Der Probenkörper besteht dabei bevorzugt aus einem Rundstab oder einem Flachstab aus dem Probenwerkstoff. Die Reflektionszonen werden mit Vorteil durch Kerben gebildet, die in den Probenkörper eingearbeitet sind. Alternativ dazu ist es aber auch möglich, dass sie durch eine Stufe im Probenkörper und durch das Ende des Probenkörpers gebildet werden; in letzterem Falle ist bevorzugt vorgesehen, dass die Querschnittsveränderung stufenförmig ausgebildet ist.

Als Mittel zum Einleiten des Ultraschallsignals in den Probenkörper kommt bevorzugt eine herkömmliche Ultraschall-Technik mit Piezo-Prüfköpfen zum Einsatz. Andere Verfahren, wie EMUS (Elektromagnetischer Ultraschall) sind prinzipiell auch denkbar.

Besonders vorteilhaft ist es, wenn der Probenkörper eine Länge von 750 bis 1.250 mm aufweist, wobei die beiden Reflektionszonen in Form von Kerben im einen Endbereich des Probenkörpers in einem Abstand von 50 bis 200 mm, vorzugsweise in einem Abstand von 100 mm, angeordnet sind. Der Durchmesser des als Rundstab ausgebildeten Probenkörpers liegt bevorzugt zwischen 15 mm und 50 mm, vorzugsweise bei 30 mm.

Mit der vorgeschlagenen Lösung werden insbesondere folgende Vorteile erreicht:

Die Verzunderung des Materials des Probenkörpers spielt bei dem vorgeschlagenen Verfahren keine Rolle, so dass eine exakte Messung der Schallgeschwindig-keit gewährleistet ist.

Gleichmaßen ist ein Materialabtrag am Probenkörper durch auftreffendes Laserlicht unbedeutend für die genaue Bestimmung der Schallgeschwindigkeit.

In der Zeichnung sind Ausführungsbeispiele der Erfindung dargestellt. Es zeigen:
- Fig. 1: schematisch den Aufbau einer Vorrichtung zur Messung der Schallgeschwindigkeit in einem Probenkörper;
- Fig. 2: den Endabschnitt des Probenkörpers gemäß einer alternativen Ausgestaltung; und
- Fig. 3: schematisch das Prinzip der Messung der Wanddicke eines heißen Rohres nach den Laser-Ultraschallverfahren, das die ermittelten Schallgeschwindigkeiten verwendet.

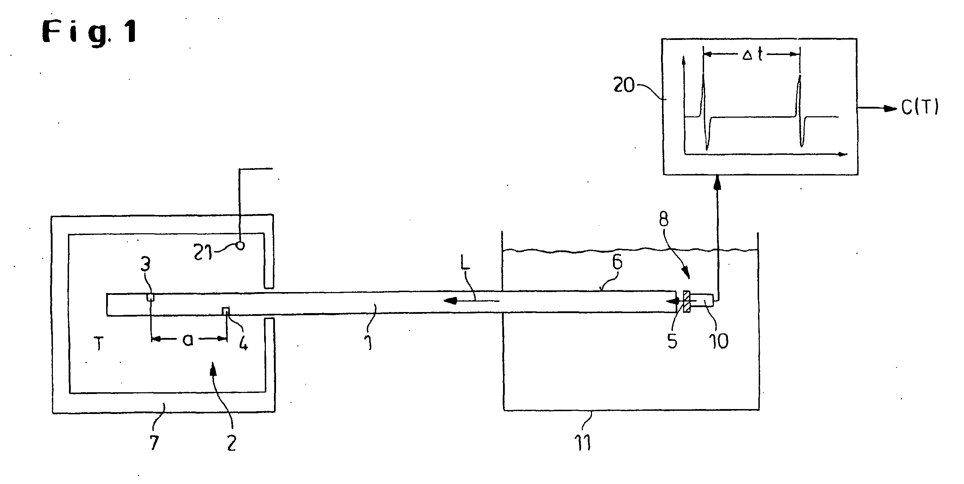

In Fig. 1 ist ein stabförmiger Probenkörper 1 zu erkennen, der zur Messung der longitudinalen Schallgeschwindigkeit c im Werkstoff des Probenkörpers benutzt wird. Zu ermitteln ist der Verlauf der Schallgeschwindigkeit c über der Temperatur T des Probenkörpers, d. h. der funktionale Zusammenhang darüber, wie sich die Schallgeschwindigkeit c über der Temperatur T des Werkstoffs ändert.

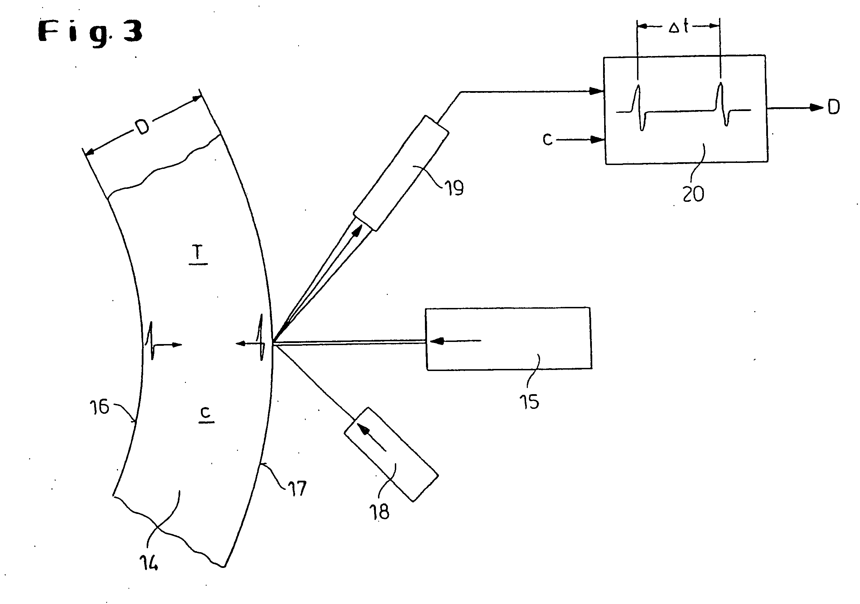

Ist die Schallgeschwindigkeit c bei vorgegebener Temperatur T bekannt, kann die Wanddicke eines gewalzten Rohres genau gemessen werden, wie es schematisch in Fig. 3 zu sehen ist:

Es kommt das Laser-Ultraschall-Heißwanddickenmessverfahren zum Einsatz, das auf das klassische Prinzip der Ultraschall-Laufzeitmessung abstellt. Aus der Zeit für das - zweimalige - Durchlaufen eines Ultraschallimpulses durch die Wand des Rohres 14 ergibt sich bei bekannter Schallgeschwindigkeit c im Material des Rohres die gesuchte Wanddicke D. Die Ankopplung des Ultraschalls bei der Heißwanddickenmessung mit Temperaturen T im Bereich von ca. 1.000 °C erfordert sowohl auf der Anregungs- als auch auf der Detektionsseite berührungslose, optische Methoden, bei denen der Messkopf selber in einem thermisch sicheren Abstand zum Rohr 14 verbleiben kann.

Hochenergetische Licht-Pulse im Infrarotbereich werden in der Rohroberfläche absorbiert. Sie werden von einem auf die Rohrwand ausgerichteten, im Ausführungsbeispiel blitzlampen-gepumpten Nd:YAG-Laser 15 (Anregungslaser) - alternativ läßt sich eine übliche Piezo-Technik (vgl. Fig. 1) oder EMUS (Elektromagnetischer Ultraschall)-Technik verwenden - erzeugt, der eine Wellenlänge von 1.064 nm bei einer Pulsdauer von weniger als 10 ns haben kann. Die vom Laser 15 auf die Rohroberfläche aufgebrachte Energie, die von der Rohrwand absorbiert wird, führt teilweise zur Verdampfung einer sehr dünnen Oberflächenschicht (Materialablation im nm-Bereich). Durch den Verdampfungs-lmpuls entsteht - wegen der Impulserhaltung - im Rohr 14 ein Ultraschall-Impuls, der senkrecht zur Rohroberfläche in die Rohrwand läuft. Der Ultraschall-Impuls wird an der Rohr-Innenoberfläche 16 reflektiert, läuft zurück zur Rohr-Außenoberfläche 17, wird erneut reflektiert usw., so dass in der Rohrwand eine Ultraschall-Echofolge abnehmender Amplitude entsteht.

Der reflektierte Ultraschallimpuls erzeugt auf der Rohr-Außenoberfläche 17 Schwingungen (im Sub-Miniaturbereich), die mittels eines zweiten Lasers 18 (Erfassungslaser) berührungslos unter Nutzung des Doppler-Effekts erfasst werden. Dieser Laser 18 kann ein CW-Laser sein (Continuous Wave Laser), namentlich ein in der Frequenz verdoppelter, diodengepumpter Nd:YAG-Laser, der mit einer Wellenlänge von 532 nm arbeitet und auf den Punkt der Anregung ausgerichtet ist. Die im Vergleich zur Lichtfrequenz niederfrequente Ultraschallschwingung führt zu einer Frequenz-Modulation des an der Materialoberfläche reflektierten Lichts.

Der reflektierte Lichtkegel, der jetzt "Träger" des Ultraschallsignales ist, wird über eine lichtstarke Sammellinse und einen Lichtwellenleiter einem optischer Analysator 19, d. h. einem Demodulator, zugeführt, wobei insbesondere ein konfokales Fabry-Perot-Interferometer zum Einsatz kommt; dessen Ausgangssignal beinhaltet bereits die Ultraschall-Echofolge.

Die weitere Verstärkung, Filterung und Signalauswertung der Ultraschall-Echofolge kann mit einer üblichen elektronischen Ultraschall-Auswerteeinheit 20 erfolgen. Das Ausgangssignal der Auswerteeinheit 20 ist die Wanddicke D des Rohres 14, die aus dem Produkt von Schallgeschwindigkeit c und gemessenem Zeitintervall Δt bestimmt wird, wie es schematisch in Fig. 3 angedeutet ist.

Zur erfindungsgemäßen Bestimmung der genauen Schallgeschwindigkeit c bei vorbestimmter Temperatur wird - wie in Fig. 1 zu sehen ist - wie folgt vorgegangen:

Der lange Probenkörper 1 in Form eines Rundstabes mit 1.000 mm Länge und 30 mm Durchmesser weist an seinem einen Endabschnitt 2 zwei Reflektionszonen 3 und 4 auf, die aus Kerben bestehen, die in den Rundstab eingebracht sind. Beide Kerben 3, 4 sind in einem genau bestimmten Abstand a angeordnet, der im Ausführungsbeispiel 100 mm beträgt. Der Abstand a zwischen den beiden Kerben 3, 4 bildet die Messstrecke. Die Kerben 3, 4 sind im Ausführungsbeispiel im Bereich der ersten 200 mm des Probenkörpers 1 eingebracht.

Der Endabschnitt 2 des Probenkörpers 1 ist in einen Ofen 7 eingebracht, wo er auf die Temperatur T erwärmt wird, bei der die Schallgeschwindigkeit c gemessen werden soll. Der restliche, nicht geheizte Abschnitt des Probenkörpers 1 kann gekühlt werden; dargestellt ist ein Kühlmittel in einem Wasserbehälter 11. Es kann namentlich vorgesehen sein, dass sich der nicht erhitzte Abschnitt des Probenkörpers 1, der im wesentlichen der Schallführung dient, mit einem Ende 6, wie in Fig. 1 dargestellt, in dem Wasserbehälter 11 befindet.

Am Ende 6 des Probenkörpers 1 ist eine Ultraschallquelle 8 angeordnet, wobei es sich hier vorzugsweise um einen konventionellen Ultraschall-Prüfkopf 10 in Piezo-Technik handelt. Die Ultraschallquelle 8 lässt eine Schallwelle 5 (Kompressionswelle, Longitudinalwelle) in Längsrichtung L des Probenkörpers 1 in Richtung auf den Endabschnitt 2 zu laufen.

An den beiden Kerben 3 und 4 wird die Schallwelle reflektiert ("Fehlerecho") und läuft - von links nach rechts in Fig. 1 - im Probenkörper 1 zurück zum Ende 6. Das reflektierte Schallsignal wird wiederum mit dem konventionellen Ultraschall-Prüfkopf 10 erfaßt und die Laufzeit zwischen den "Kerbenechos" ermittelt. Eine Ultraschall-Elektronik bzw. -Auswerteeinheit 20 erhält das gemessene Zeitintervall Δt, das zwischen den reflektierten Wellen an den beiden Kerben 3, 4 liegt. Durch Quotientenbildung a / Δt wird die Schallgeschwindigkeit c bei der Temperatur T ermittelt.

Wird nach und nach die Temperatur T im Ofen 7 langsam erhöht, kann der funktionale Zusammenhang c = c (T) gemessen werden. Die jeweils aktuelle Temperatur T wird von einem Sensor 21 erfasst. Dabei wird bis zu einer Temperatur von ca. 600 °C in 100 K-Schritten gemessen und zwischen 600 °C bis 1.200 °C in 50 K-Schritten. Die Rasterung der Temperaturschritte hängt von der jeweiligen Aufgabenstellung ab. Da für die Heißrohr-Wanddickenmessung der T-Bereich oberhalb 600°C besonders relevant ist, wählt man in diesem T-Bereich, in dem auch metallurgische Umwandlungen im Material erfolgen, das Raster relativ engmaschig.

Als Ergebnis liegt der Verlauf der Schallgeschwindigkeit c als Funktion der Temperatur T vor, wobei die Wärmeausdehnung des Materials mit enthalten ist.

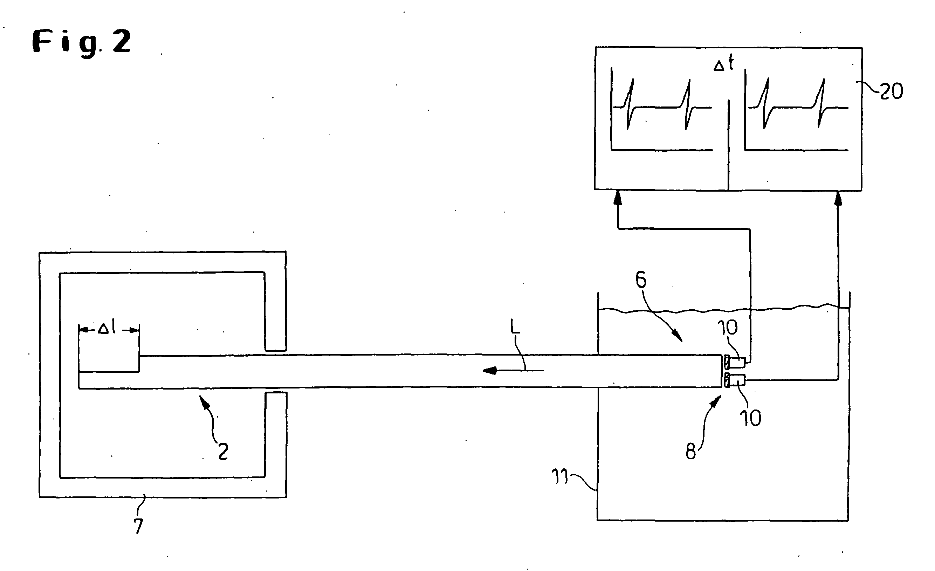

Wie in Fig. 2 zu sehen ist, kann der Endabschnitt 2 des Probenkörpers 1 auch geometrisch anders ausgeführt sein. Hier ist vorgesehen, dass die Meßstrecke durch einen gestuften Abschnitt Δl an dem im Ofen 7 befindlichen Ende des langen Probenkörpers (Stab) 1 gebildet wird. Dem vom Wasserbehälter 11 aufgenommenen Ende 6 des langen Probenkörpers 1 sind zwei Piezo-Ultraschall-Prüfköpfe 10 zugeordnet, die mit der Ultraschall-Elektronik bzw. -Auswerteeinheit 20 signaltechnisch verbunen sind.

Unter der Annahme, dass der Probenkörper 1 während des Aufheizens in seinem Endabschnitt 2 nicht ungleichmäßig verzundert, liefert die Laufzeitdifferenz der reflektierten Wellen die gewünschte Information, um die Schallgeschwindigkeit c bestimmen zu können.

### Bezugszeichenliste:

- 1: Probenkörper
- 2: Endabschnitt des Probenkörpers
- 3: Reflektionszone
- 4: Reflektionszone
- 5: Ultraschallsignal
- 6: Ende des Probenkörpers
- 7: Heizmittel (Ofen)
- 8: Ultraschallquelle
- 10: Piezo-Ultraschall-Prüfkopf
- 11: Wasserbehälter
- 14: Rohr
- 15: Anregungslaser
- 16: Rohr-Innenoberfläche
- 17: Rohr-Außenoberfläche
- 18: Erfassungslaser
- 19: optischer Analysator (Fabry-Perot-Interferometer)
- 20: Ultraschall-Auswerteeinheit
- 21: Temperatursensor
- c: Schallgeschwindigkeit
- T: Temperatur
- L: Längsrichtung
- a: Abstand
- t: Zeitintervall
- D: Wanddicke
- Δl: gestufter Abschnitt

## Patentansprüche

1. Verfahren zur Bestimmung der Schallgeschwindigkeit (c) in einem Werkstoff in Abhängigkeit von seiner Temperatur (T), das die Schritte aufweist:
a) Bereitstellen eines aus dem Werkstoff bestehenden Probenkörpers (1) in einer Längsrichtung (L), wobei der Probenkörper (1) in einem seiner Endabschnitte (2) zwei Reflektionszonen (3, 4) in vorgegebenem Abstand (a) aufweist;
b) Erhitzen zumindest des Endabschnitts (2), der die zwei Reflektionszonen aufweist, des Probenkörpers (1) auf die Temperatur (T), bei der die Schallgeschwindigkeit (c) ermittelt werden soll;
c) Einleiten eines Ultraschallsignals (5) in den Probenkörper (1);
d) Messen des Zeitintervalls (Δt) zwischen zwei vom Probenkörper (1) emittierten Echo-Ultraschallsignalen, die durch Reflektion des Ultraschallsignals (5) an den beiden Reflektionszonen (3, 4) entstehen;
e) Berechnen der Schallgeschwindigkeit (c) als Quotient des Abstands (a) und des Zeitintervalls (At),
wobei zumindest das dem erwärmten Endabschnitt (2) gegenüberliegende Ende (6) des Probenkörpers (1) gekühlt wird.

2. Verfahren nach Anspruch 1,
**dadurch gekennzeichnet,**
**dass** die Schritte b) bis e) bei unterschiedlichen Temperaturen (T) wiederholt werden.

3. Verfahren nach Anspruch 2,
**dadurch gekennzeichnet,**
**dass** das Probenmaterial Metall, insbesondere Stahl, ist und die Messung der Schallgeschwindigkeit (c) bei Temperaturen (T) zwischen Raumtemperatur und 1.200 °C erfolgt.

4. Verfahren nach Anspruch 3,
**dadurch gekennzeichnet,**
**dass** die Messung der Schallgeschwindigkeit (c) bei Temperaturen (T) zwischen 600 °C und 1.200 °C in Schritten von 50 K erfolgt.

5. Verfahren nach Anspruch 3,
**dadurch gekennzeichnet,**
**dass** die Messung der Schallgeschwindigkeit (c) bei Temperaturen (T) zwischen Raumtemperatur und 600 °C in Schritten von 100 K erfolgt.

6. Verfahren nach einem der Ansprüche 1 bis 5,
**dadurch gekennzeichnet,**
**dass** der gesamte nicht erwärmte Teil des Probenkörpers (1) gekühlt wird.

7. Verfahren nach einem der Ansprüche 1 bis 6,
**dadurch gekennzeichnet,**
**dass** das Ultraschallsignal (5) in den Probenkörper (1) an dem dem erwärmten Endabschnitt (2) gegenüberliegende Ende (6) des Probenkörpers (1) eingeleitet wird.

8. Verfahren nach einem der Ansprüche 1 bis 7,
**dadurch gekennzeichnet,**
**dass** das Ultraschallsignal (5) in den Probenkörper (1) über ein Piezo-Ultraschallelement mit Wasserankopplung eingeleitet wird.

9. Vorrichtung zur Bestimmung der Schallgeschwindigkeit (c) in einem Werkstoff in Abhängigkeit von seiner Temperatur (T), insbesondere zur Durchführung des Verfahrens nach einem der Ansprüche 1 bis 8,
**gekennzeichnet durch**
- einen aus dem Werkstoff bestehenden, in einer Längsrichtung (L) bereitgestellten Probenkörper (1), der in einem seiner Endabschnitte (2) zwei Reflektionszonen (3, 4) in vorgegebenem Abstand (a) aufweist,
- Heizmittel (7), insbesondere einen Ofen, das den die zwei Reflektionszonen aufweisenden Endabschnitt (2) des Probenkörpers (1) auf eine gewünschte Temperatur (T), bei der die Schallgeschwindigkeit (c) ermittelt werden soll, erwärmt,
- Mittel (8) zum Einleiten eines Ultraschallsignals (5) in den Probenkörper (1),
- Mittel (9) zum Messen des Zeitintervalls (At) zwischen zwei Echo-Ultraschallsignalen, die der Probenkörper (1) emittiert, die **durch** Reflektion des Ultraschallsignals (5) an den beiden Reflektionszonen (3, 4) entstehen,
- Mittel (10) zum Berechnen der Schallgeschwindigkeit (c) als Quotient des Abstands (a) und des Zeitintervalls (At) und
- Mittel (11) zum Kühlen zumindest des dem erwärmten Endabschnitt (2) gegenüberliegenden Endes (6) des Probenkörpers (1).

10. Vorrichtung nach Anspruch 9,
**dadurch gekennzeichnet,**
**dass** der Probenkörper (1) als ein Rundstab oder Flachstab aus dem Probenwerkstoff ausgebildet ist.

11. Vorrichtung nach Anspruch 9 oder 10,
**dadurch gekennzeichnet,**
**dass** die Reflektionszonen (3, 4) als in den Probenkörper (1) eingearbeitete Kerben ausgebildet sind.

12. Vorrichtung nach Anspruch 9 oder 10,
**dadurch gekennzeichnet,**
**dass** die Reflektionszonen (3, 4) durch eine Querschnittsveränderung im Probenkörper (1) ausgebildet sind.

13. Vorrichtung nach Anspruch 12,
**dadurch gekennzeichnet,**
**dass** die Querschnittsveränderung stufenförmig ausgebildet ist.

14. Vorrichtung nach einem der Ansprüche 9 bis 13,
**dadurch gekennzeichnet,**
**dass** der Probenkörper (1) eine Länge von 750 bis 1.250 mm aufweist, wobei die beiden Reflektionszonen (3, 4) in Form von Kerben im einen Endbereich (2) des Probenkörpers (1) in einem Abstand von 50 bis 200 mm, vorzugsweise in einem Abstand von 100 mm, angeordnet sind.

15. Vorrichtung nach Anspruch 14,
**dadurch gekennzeichnet,**
**dass** der Probenkörper (1) als Rundstab mit einem Durchmesser zwischen 15 mm und 50 mm, vorzugsweise mit einem Durchmesser von 30 mm, ausgebildet ist.

## Claims

1. A method for determining the velocity of sound (c) in a material as a function of its temperature (T), comprising the steps:
a) providing a sample body (1) consisting of the material in a longitudinal direction (L), wherein the sample body (1) has two reflection zones (3, 4) at a predefined distance (a) in one of its end sections (2);
b) heating at least the end section (2) having the two reflection zones of the sample body (1) to the temperature (T) at which the velocity of sound (c) is to be determined;
c) introducing an ultrasound signal (5) into the sample body (1);
d) measuring the time interval (Δt) between two echo ultrasound signals emitted by the sample body (1), formed by reflection of the ultrasound signal (5) at the two reflection zones (3, 4);
e) calculating the velocity of sound (c) as the quotient of the distance (a) and the time interval (Δt),
wherein at least the end (6) of the sample body (1) opposite the heated end section (2) is cooled.

2. The method according to claim 1, **characterised in that** steps b) to e) are repeated at different temperatures (T).

3. The method according to claim 2, **characterised in that** the sample material is metal, in particular steel and the measurement of the velocity of sound (c) is made at temperatures (T) between room temperature and 1200°C.

4. The method according to claim 3, **characterised in that** the measurement of the velocity of sound (c) is made at temperatures (T) between 600°C and 1200°C in steps of 50 K.

5. The method according to claim 3, **characterised in that** the measurement of the velocity of sound (c) is made at temperatures (T) between room temperature and 600°C in steps of 100 K.

6. The method according to any one of claims 1 to 5, **characterised in that** the entire non-heated part of the sample body (1) is cooled.

7. The method according to any one of claims 1 to 6, **characterised in that** the ultrasound signal (5) is introduced into the sample body (1) at the end (6) of the sample body (1) opposite to the end section (2).

8. The method according to any one of claims 1 to 7, **characterised in that** the ultrasound signal (5) is introduced into the sample body (1) via a piezo-ultrasound element with water coupling.

9. A device for determining the velocity of sound (c) in a material as a function of its temperature (T), in particular for carrying out the method according to any one of claims 1 to 8, **characterised in that**:
- a sample body (1) consisting of the material is provided in a longitudinal direction (L), which has two reflection zones (3, 4) at a predefined distance (a) in one of its end sections (2),
- heating means (7), in particular a furnace, which heats at least the end section (2) having the two reflection zones of the sample body (1) to a desired temperature (T) at which the velocity of sound (c) is to be determined;
- means (8) for introducing an ultrasound signal (5) into the sample body (1);
- means (9) for measuring the time interval (Δt) between two echo ultrasound signals emitted by the sample body (1), formed by reflection of the ultrasound signal (5) at the two reflection zones (3, 4);
- means (10) for calculating the velocity of sound (c) as the quotient of the distance (a) and the time interval (Δt), and
- means (11) for cooling at least the end (6) of the sample body (1) opposite the heated end section (2).

10. The device according to claim 9, **characterised in that** the sample body (1) is formed as a round rod or flat rod of the sample, material.

11. The device according to claim 9 or 10, **characterised in that** the reflection zones (3, 4) are formed as notches incorporated in the sample body (1).

12. The device according to claim 9 or 10, **characterised in that** the reflection zones (3, 4) are formed by a cross-sectional change in the sample body (1).

13. The device according to claim 12, **characterised in that** the cross-sectional change is configured as step-shaped.

14. The device according to any one of claims 9 to 13, **characterised in that** the sample body (1) has a length of 750 to 1250 mm, wherein the two reflection zones (3, 4) are arranged in the form of notches in an end region (2) of the sample body (1) at a distance of 50 to 200 mm, preferably at a distance of 100 mm.

15. The device according to claim 14, **characterised in that** the sample body (1) is formed as a round rod having a diameter between 15 mm and 50 mm, preferably having a diameter of 30 mm.

## Revendications

1. Procédé de détermination de la vitesse du son (c) dans un matériau en fonction de sa température (T), comportant les étapes suivantes :
a) placement d'un corps d'essai (1) composé d'un matériau dans un sens longitudinal (L), le corps d'essai (1) présentant dans ses sections terminales (2) deux zones de réflexion (3, 4) à espacement prescrit (a) ;
b) chauffage au moins de la section terminale (2) incluant les deux zones de réflexion du corps d'essai (1) à la température (T) à laquelle la vitesse du son (c) doit être déterminée ;
c) conduction d'un signal d'ultrason (5) dans corps d'essai (1) ;
d) mesure de l'intervalle de temps (Δt) entre deux signaux d'ultrason en écho émis qui sont produits par réflexion du signal d'ultrason (5) sur les deux zones de réflexion (3, 4) ;
e) calcul de la vitesse du son (c) sous forme de quotient de l'espacement (a) et de l'intervalle de temps (Δt),
tandis qu'au moins l'extrémité (6) opposée à la section terminale chauffée (2) du corps d'essai (1) est refroidie.

2. Procédé selon la revendication 1,
**caractérisé en ce que**
les étapes b) à e) sont répétées à des températures différentes (T).

3. Procédé selon la revendication 2,
**caractérisé en ce que**
la matière d'essai est du métal, notamment de l'acier, et que la mesure de la vitesse du son (c) est réalisée à des températures (T) allant de la température ambiante à 1.200° C.

4. Procédé selon la revendication 3,
**caractérisé en ce que**
la mesure de la vitesse du son (c) est réalisée à des températures (T) allant de 600° C à 1.200° C par étapes de 50 K.

5. Procédé selon la revendication 3,
**caractérisé en ce que**
la mesure de la vitesse du son (c) est réalisée à des températures (T) allant de la température ambiante à 600° C par étapes de 50 K.

6. Procédé selon une des revendications 1 à 5,
**caractérisé en ce que**
la totalité de la partie non chauffée du corps d'essai (1) est refroidie.

7. Procédé selon une des revendications 1 à 6,
**caractérisé en ce que**
le signal d'ultrason (5) est conduit dans le corps d'essai (1) à l'extrémité (6) opposée à la section terminale chauffée (2) du corps d'essai (1).

8. Procédé selon une des revendications 1 à 7,
**caractérisé en ce que**
le signal d'ultrason (5) est conduit dans le corps d'essai (1) par un élément piézoélectrique à ultrasons raccordé à de l'eau.

9. Dispositif de détermination de la vitesse du son (c) dans un matériau en fonction de sa température (T), notamment pour la réalisation du procédé selon une des revendications 1 à 8,
**caractérisé par**
- un corps d'essai (1) composé d'un matériau et placé dans un sens longitudinal (L), qui présente dans une de ses sections terminales (2) deux zones de réflexion (3, 4) à espacement prescrit (a),
- un moyen chauffant (7), notamment un four, qui chauffe la section terminale (2) incluant les deux zones de réflexion (3, 4) du corps d'essai (1) à une température souhaitée (T) à laquelle la vitesse du son (c) doit être déterminée,
- un moyen (8) d'introduction d'un signal d'ultrason (5) dans le corps d'essai (1),
- un moyen (9) de mesure de l'intervalle de temps (Δt) entre deux signaux d'ultrason en écho émis par le corps d'essai (1) qui se forment par réflexion du signal d'ultrason (5) sur les deux zones de réflexion (3, 4),
- un moyen (10) de calcul de la vitesse du son (c) sous forme de quotient de l'espacement (a) et de l'intervalle de temps (Δt) et
- un moyen (11) de refroidissement au moins de l'extrémité (6) opposée à la section terminale chauffée (2) du corps d'essai (1).

10. Dispositif selon la revendication 9,
**caractérisé en ce que**
le corps d'essai (1) est réalisé sous forme d'une barre ronde ou d'une barre plate en matériau d'essai.

11. Dispositif selon la revendication 9 ou 10,
**caractérisé en ce que**
les zones de réflexion (3, 4) sont réalisées sous forme d'entailles pratiquées dans le corps d'essai (1).

12. Dispositif selon la revendication 9 ou 10,
**caractérisé en ce que**
les zones de réflexion (3, 4) sont constituées par un changement de section transversale du corps d'essai (1).

13. Dispositif selon la revendication 12,
**caractérisé en ce que**
le changement de section transversale est réalisé sous forme d'échelons.

14. Dispositif selon une des revendications 9 à 13,
**caractérisé en ce que**
le corps d'essai (1) a une longueur de 750 à 1.250 mm, les deux zones de réflexion (3, 4) étant disposées sous forme d'entailles dans une zone terminale (2) du d'essai (1) avec un espacement de 50 à 200 mm, de préférence un espacement de 100 mm.

15. Dispositif selon la revendication 14,
**caractérisé en ce que**
le corps d'essai (1) est réalisé sous forme d'une barre ronde d'un diamètre compris entre 15 mm et 50 mm, de préférence d'un diamètre de 30 mm.
